# EUROPEAN PATENT APPLICATION

(11) **EP 2 728 762 A2**
(43) Date of publication of application: **07.05.2014**
(21) Application number: 13003145.3
(22) Date of filing: 20.06.2013
(51) Int. Cl.: H04B 1/38

(54) **Protection cover for mobile device**

(30) Priority: 02.11.2012 KR 20120123733; 10.05.2013 KR 20130053090
(71) Applicant: Newvit Co., Ltd., Seoul 142-884 (KR)
(72) Inventor: Sin, Ki Sub, Seoul 143-839 (KR)
(74) Representative: Lusuardi, Werther

(57) **Abstract**

The present invention relates to a protection cover for a mobile device, in which a transparent section for viewing the content of a display screen is formed on the protection cover for protecting the display screen and the front surface of the mobile device. The transparent section has a transparent member for seeing through the content of the display screen from outside using the light emitted from the display screen.

Accordingly, since the front surface of a portable mobile device such as a smart phone may be safely protected even when an external shock is applied to the front surface, and the content on the display screen may be confirmed or a touch function can be handled even when the cover is not opened, it is effective in that convenience of using the mobile device is provided.

## Description

### CROSS-REFERENCE TO RELATED APPLICATION

This application is based on and claims priority from Korean Patent Application No. 10-2012-0123733 filed on November 2, 2012 and No. 10-2013-0053090 filed on May 10, 2013 in the Korean Intellectual Property Office, the disclosure of which is incorporated herein in its entirety by reference.

### BACKGROUND OF THE INVENTION

### Field of the Invention

The present invention relates to a protection cover for a mobile device, which is configured to confirm and handle key information and functions displayed on a display screen by touching the display screen from outside without opening the protection cover, while protecting the front surface of the portable mobile device such as a smart phone or a tablet PC.

### Background of the Related Art

As techniques of cellular phones are advanced further more and mobile devices of a new type such as a smart phone, a tablet PC and the like are released recently, a great revolution in portable communication device is taking place.

Particularly, a mobile device such as a smart phone or a tablet PC is equipped with a variety of functions integrating the functions of expensive portable devices such as a notebook computer, a PDA, a PMP and the like, as well as telephone functions and Internet functions. Particularly, since the front surface of the portable device has a full-touch display screen, the price of such a product is very high, and thus the display screen should be protected while using the mobile device.

Accordingly, a lot of protection covers of diverse materials, designs and functions and protection cases having such a protection cover are released in the market to prevent the mobile device from being damaged and the display screen from being scratched or contaminated. Among these, a product called as a 'flip cover' for protecting the touch screen is widely used.

However, since such a conventional protection cover should be frequently opened and closed to confirm the content displayed on the liquid crystal screen, it is troublesome to use the mobile terminal.

In addition, since the action of opening and closing the protection cover is frequently repeated in proportion to the number of using the mobile device, the protection cover, a connection unit and a rear cover are easily damaged and frequently replaced, users suffer from economical burdens.

Therefore, users earnestly require a protection cover for a mobile device, which can confirm or handle the content displayed on the display screen by touching the display screen without opening the protection cover, while protecting the front surface of the mobile device from being damaged by an external shock.

### SUMMARY OF THE INVENTION

Therefore, it is an object of the present invention to provide a protection cover for a portable mobile device, which is configured to confirm the content displayed on a display screen without opening the protection cover and handle touch functions of the mobile device from outside, while protecting the front surface of the portable mobile device such as a smart phone or a small-sized tablet PC.

Other objects unmentioned in the object of the present invention may be clearly understood by those skilled in the art from the following descriptions.

To accomplish the above object, according to an aspect of the present invention, there is provided a protection cover for a mobile device configured to protect a display screen of the portable mobile device, the protection cover including: a transparent section capable of confirming key information displayed on the display screen when the mobile device operates while the protection cover covers the display screen.

According to an embodiment of the present invention, the transparent section may be formed at a position corresponding to an area displaying the key information shown on the display screen when the mobile device is driven.

According to another embodiment of the present invention, the transparent section may be formed in a size the same as that of the display screen.

According to still another embodiment of the present invention, the protection cover may include a mounting cover additionally mounted after removing a rear cover assembled on a rear surface of the mobile device and is connected to the mounting cover through a connection member connected to the mounting cover to protect the display screen.

According to still another embodiment of the present invention, the transparent section may have an opening section formed at a portion of a front surface of the protection cover, and a transparent member for protecting the display screen may be provided in the opening section.

According to still another embodiment of the present invention, the transparent member may include a transparent screen unit assembled in correspondence with the opening section and exposed outside and a fixing unit formed along edges of the transparent screen section, and the fixing unit may be fixedly inserted into the protection cover and assembled in one piece.

According to still another embodiment of the present invention, the transparent member may be formed of a transparent or semitransparent synthetic resin having a conductive function, a tempered glass or a half mirror so that the display screen may be handled by touch from outside.

According to still another embodiment of the present invention, the transparent member may be formed in correspondence with a position and an outer size of the key information or display content shown on the display screen.

According to still another embodiment of the present invention, the transparent member may be formed on the protection cover in a horizontal direction.

According to still another embodiment of the present invention, the transparent member may be formed on the protection cover to be extended long in a vertical direction.

According to still another embodiment of the present invention, the transparent member may be formed to be placed at one side of the protection cover in a horizontal or vertical direction.

According to still another embodiment of the present invention, the fixing unit may be extendedly formed in an area other than the transparent member, and an adhesive member may be provided on both sides of the fixing unit to be attached to an outer member and an inner member.

According to still another embodiment of the present invention, a reinforcement member may be further provided between the fixing unit and the outer member and between the fixing unit and the inner member.

According to still another embodiment of the present invention, the protection cover may have a frame unit formed along edges of the display screen, and the transparent member may be formed inside the frame unit in a size corresponding to the display screen.

According to still another embodiment of the present invention, function holes may be formed on the front surface of the protection cover at positions corresponding to functional components arranged on a front surface of the portable mobile device.

The function hole may be configured as a selective combination of a communication speaker hole, a front side camera hole, a user recognition hole and a light sensor hole, and a push button display unit may be further provided at a side of the protection cover at a position corresponding to a function button unit or a touch button unit of the portable mobile device.

According to still another embodiment of the present invention, the transparent member may be assembled to be inserted into the protection cover while maintaining a minute gap between a bottom surface thereof and the display screen P so as not to contact with each other.

According to still another embodiment of the present invention, a mount sensor unit may be provided at one side of the rear surface of the portable mobile device so as to recognize whether or not the protection cover is mounted through a contact or non-contact type touch of the mount sensor unit with the mount recognition unit provided on the mounting cover; and when the mounting cover is installed, the key information displayed on the display screen of the portable mobile device may be displayed only in an area of the transparent member of the protection cover.

According to still another embodiment of the present invention, a sensing means for determining whether or not the protection cover covers the display screen may be embedded inside the protection cover, and the sensing means may be configured to turn on or turn off the display screen according to an opening or closing state of the protection cover in association with a control circuit unit in the mobile device while transmitting and receiving the opening or closing state in wired or wireless communication to and from a connection terminal of the rear cover connected to a circuit connection unit provided on the rear surface of the mobile device.

According to still another embodiment of the present invention, the protection cover may include an outer member and an inner member, and the transparent member may include a transparent screen section and a fixing unit formed along edges of the transparent screen section, in which the fixing unit is fixed between the outer member and the inner member and assembled in one piece.

A reinforcement member may be further provided between the outer member and the inner member, and the fixing unit may be inserted and fixed inside the reinforcement member.

In addition, the reinforcement member may include a first reinforcement plate and a second reinforcement plate formed of synthetic resin, and the fixing unit may be accommodated in a resting unit formed between the first reinforcement plate and the second reinforcement plate, and the transparent screen unit may be configured inside the resting unit to be exposed outside through a transparent window formed to communicate with the opening section.

The first reinforcement plate and the second reinforcement plate, and the resting unit and the fixing unit may be attached by the adhesive member in one piece, and the outer member and the inner member may be attached to outer surfaces of the first reinforcement plate and the second reinforcement plate in one piece by the adhesive member.

An accommodation groove for accommodating an FPCB is further provided at one side of the resting unit.

The sensing means accommodated inside the reinforcement member to sense opening or closing of the protection cover may be provided at one end of the FPCB, in which a middle part of the FPCB is inserted inside the connection member connected to one end of the protection cover, and the other end of the FPCB may be connected to the connection terminal inside the rear cover, which is connected to the circuit connection unit provided on the rear surface of the portable mobile device, to turn on and off the display screen according to opening and closing of the protection cover.

In addition, the sensing means may be configured of a magnetic sensor, an illuminance sensor, a photo sensor or a proximity sensor.

### BRIEF DESCRIPTION OF THE DRAWINGS

The figures described below are merely examples and are not intended to limit the scope of the present invention.

FIGs. 1a and 1b are a front view and an enlarged cross-sectional view taken along line 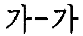 showing the configuration of a protection cover for a mobile device according to an embodiment of the present invention.

FIGs. 2a to 2c are a front view, a cross-sectional view of an important part, and an enlarged cross-sectional view taken along line 4-4 showing the configuration of a protection cover for a mobile device according to another embodiment of the present invention.

FIGs. 3a and 3b are a front view and a plane cross-sectional view showing a protection cover for a mobile device according to still another embodiment of the present invention.

FIGs. 4a and 4b are an assembled cross-sectional view and a disassembled cross-sectional view showing the assembly structure of a protection cover for a mobile device according to still another embodiment of the present invention.

FIGs. 5 to 7 are assembled cross-sectional views showing a protection cover for a mobile device having a reinforcement member according to still another embodiment of the present invention.

FIG. 8 is a disassembled front view and a plane cross-sectional view showing the configuration of a means for sensing mount of a protection cover according to still another embodiment of the present invention.

FIGs. 9 and 10 are disassembled front views showing the configuration of a means for sensing opening and closing of a protection cover according to still another embodiment of the present invention.

FIG. 11 is a flowchart illustrating a method of recognizing opening and closing of a protection cover according to still another embodiment of the present invention.

**DESCRIPTION OF SYMBOLS**

| | | | |
|---|---|---|---|
| 10: | Protection cover | 11: | Opening section |
| 12: | Frame unit | 13: | Function hole |
| 14: | Communication speaker hole | 15: | Front side camera hole |
| 16: | User recognition hole | 17: | Light sensor hole |
| 18: | Push button display unit | | |
| 20: | Transparent section | 21: | Transparent member |
| 22: | Transparent screen section | 23: | Fixing unit |
| 24: | Resting shoulder | | |
| 30: | Mounting cover | 40: | Connection member |
| 50: | Inner member | 51: | Outer member |
| 52: | Adhesive member | | |
| 60: | Reinforcement member | 61: | First Reinforcement plate |
| 62: | Second Reinforcement plate | 63: | Resting unit |
| 64: | Transparent window | 65: | Accommodation groove |
| 70: | Mount sensor unit | 80: | Mount recognition unit |
| 100: | FPCB | 110: | Sensing means |
| 120: | Connection terminal | 130: | Circuit connection unit |
| M: | Mobile device | P: | Display screen |
| F: | Key information | D: | Minute gap |

### DETAILED DESCRIPTION OF THE PREFERRED EMBODIMENT

Hereafter, a protection cover for a mobile device according to preferred embodiments of the invention will be described in detail with reference to the accompanying drawings. In this embodiment, an example of a protection case, which is referred to as a 'flip cover' including a protection cover, a connection part and a rear cover, applied to a mobile device after separating the rear cover provided in the mobile terminal will be described. Apparently, the present invention is not limited to this embodiment, but can be applied to all kinds of protection covers applied to various types of protection cases according to the type of a mobile device.

In addition, like symbols and names will refer to like elements throughout the description of following various embodiments.

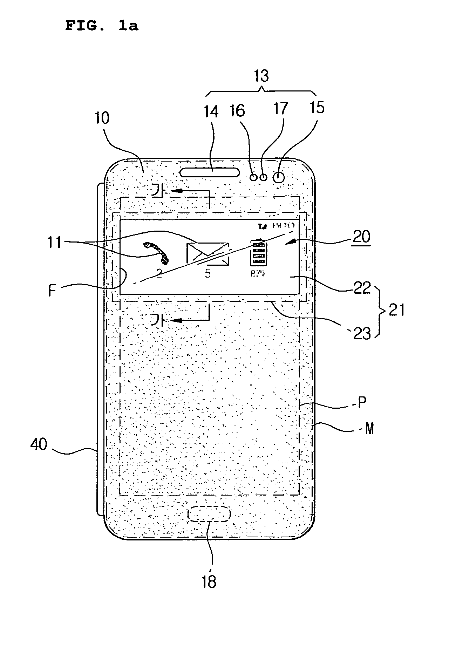

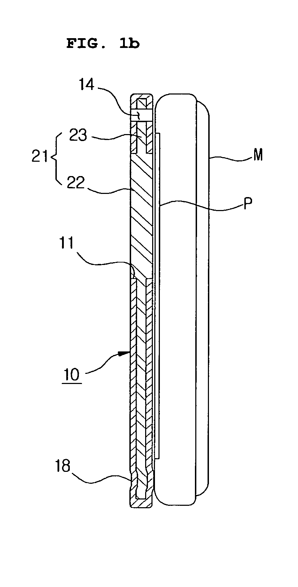

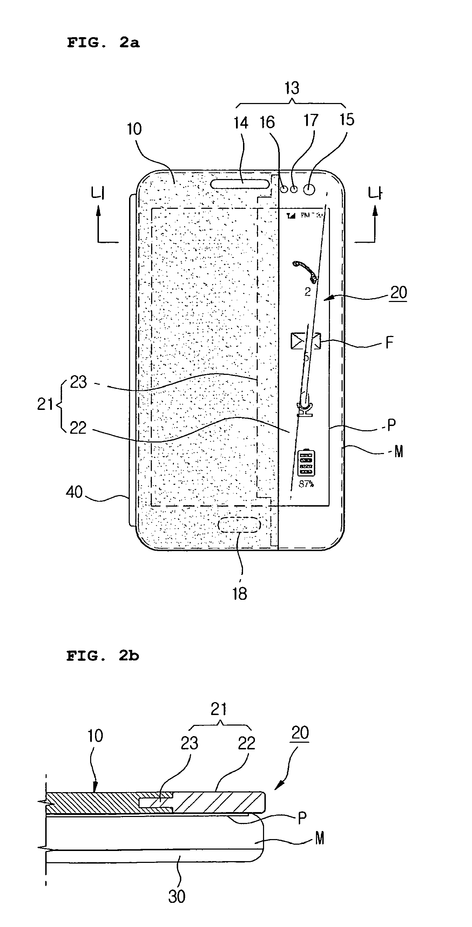

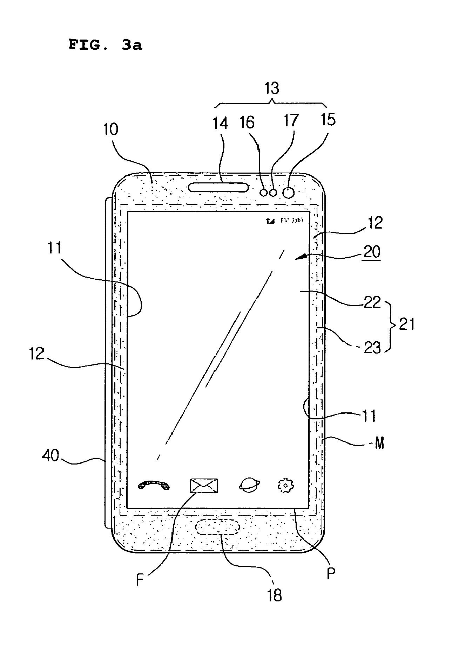

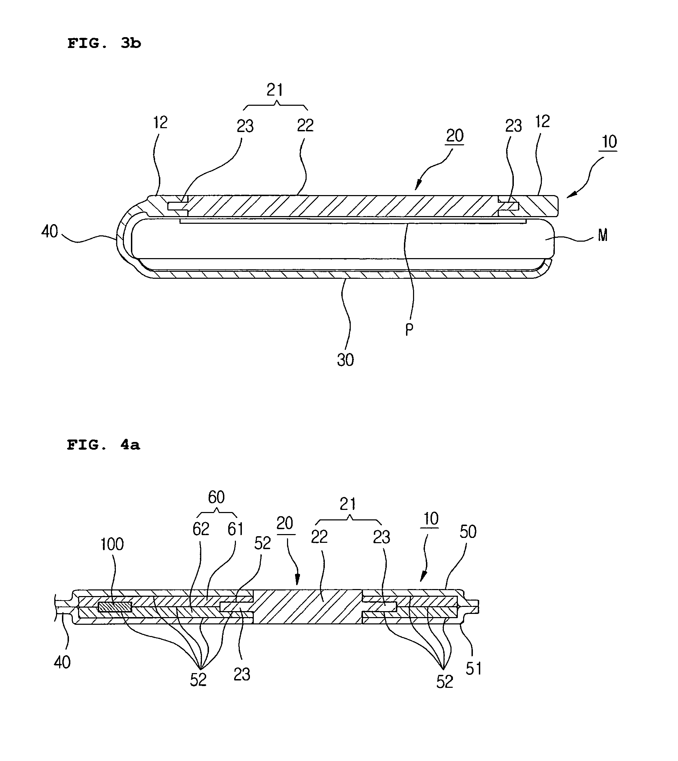

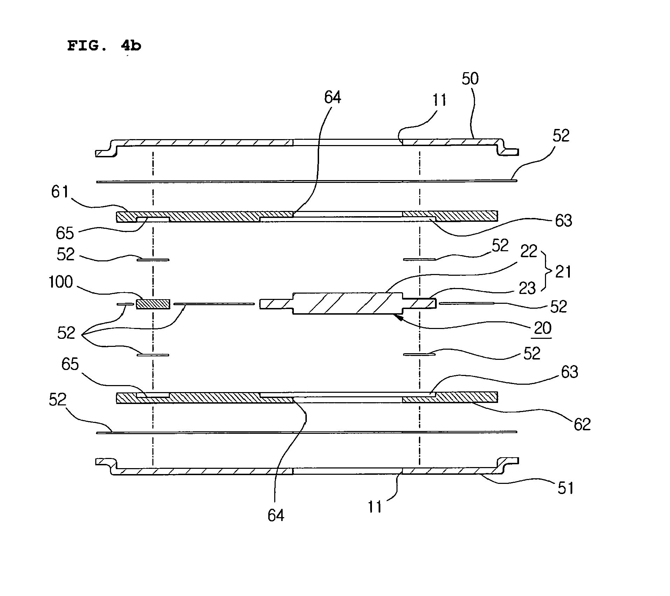

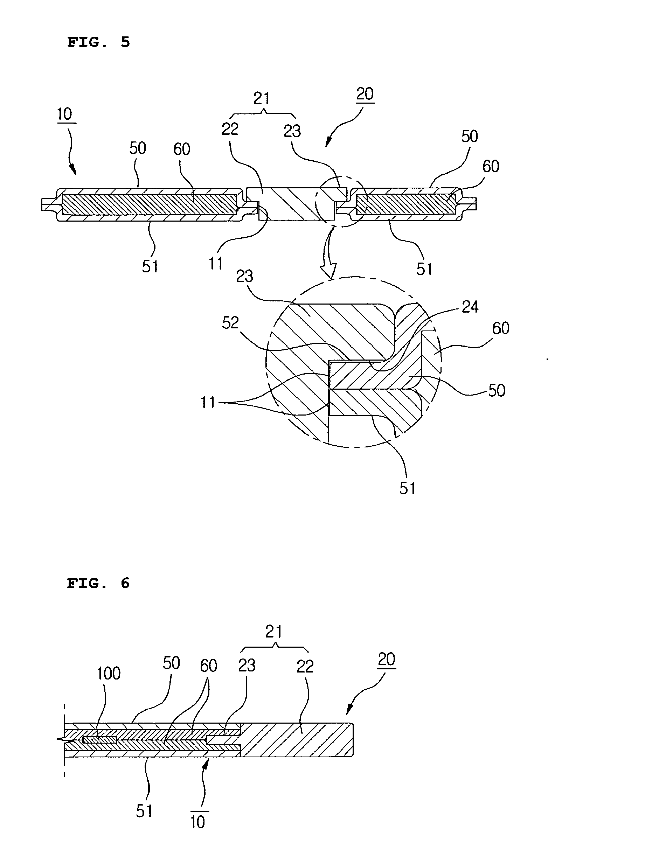

FIGs. 1a and 1b are a front view and an enlarged cross-sectional view taken along line 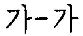 showing the configuration of a protection cover for a mobile device according to an embodiment of the present invention; FIGs. 2a to 2c are a front view, a cross-sectional view of an important part, and an enlarged cross-sectional view taken along line 4-4 showing the configuration of a protection cover for a mobile device according to another embodiment of the present invention; FIGs. 3a and 3b are a front view and a plane cross-sectional view showing a protection cover for a mobile device according to still another embodiment of the present invention; FIGs. 4a and 4b are an assembled cross-sectional view and a disassembled cross-sectional view showing the assembly structure of a protection cover for a mobile device according to still another embodiment of the present invention; and FIGs. 5 to 7 are assembled cross-sectional views showing a protection cover for a mobile device having a reinforcement member according to still another embodiment of the present invention.

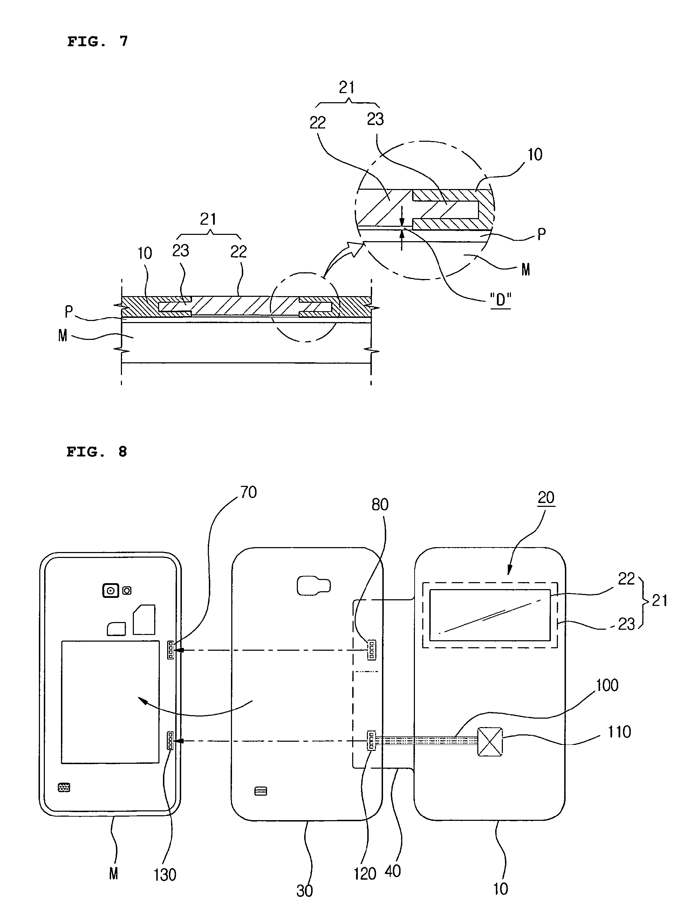

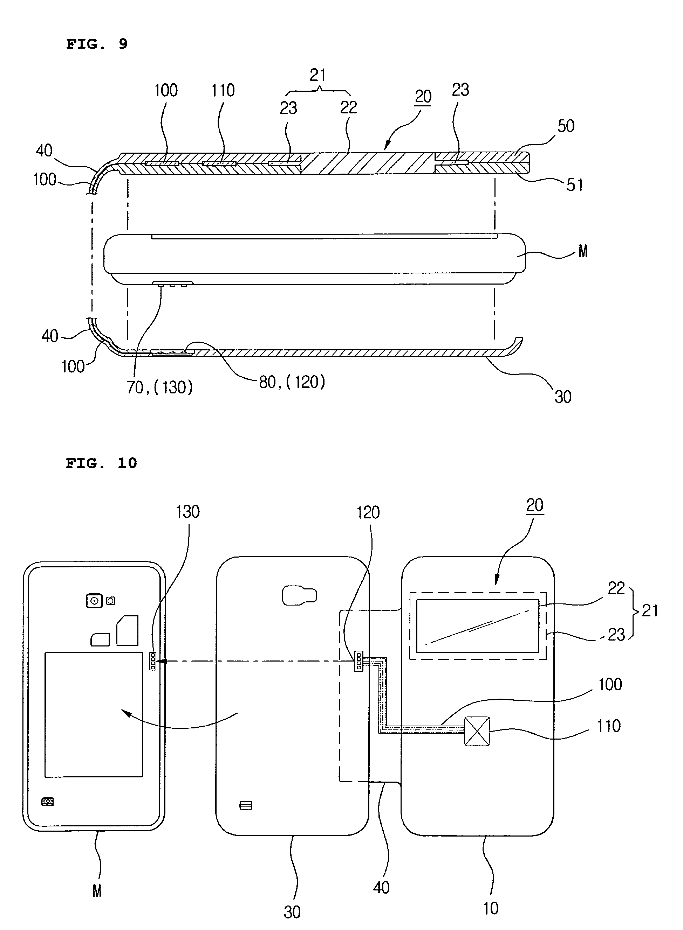

FIG. 8 is a disassembled front view and a plane cross-sectional view showing the configuration of a means for sensing mount of a protection cover according to still another embodiment of the present invention; and FIGs. 9 and 10 are disassembled front views showing the configuration of a means for sensing opening and closing of a protection cover according to still another embodiment of the present invention.

First, the basic configuration of the protection cover for a mobile device according to an embodiment of the present invention will be described below in detail.

As the most outstanding characteristic of the configuration, as shown in FIGs. 1 to 3, a protection cover 10 for a mobile device according to the present invention includes a transparent section 20 capable of confirming key information F displayed on the display screen P when the mobile device M operates while the protection cover 10 is closed.

In this embodiment, the protection cover 10 may be formed in the shape of a sheet of plate made of a synthetic resin material or configured as an assembly of a fabric capable of high frequency fusion and a reinforcement member 60 assembled between the fabrics in one piece.

Apparently, a fabric capable of high frequency fusion such as soft velvet or suede may be patched on the entire inner surface of the protection cover 10 in order to protect the display screen P.

In addition, the key information F shown on the display screen P of the mobile device is information that can be confirmed through the transparent section without opening the protection cover 10 by briefly displaying only icons or the like of, for example, a character message, indication of remaining battery and the like, in addition to current date and time and a received phone number, among the content displayed on the display screen P.

For example, the key information F mostly means display of brief key information F such as current date and time, records of missed calls, the number of received character messages, indication of remaining battery, details of a received mail and the like.

Accordingly, a user may conveniently confirm the key information F displayed in the area of the transparent section 20 of the display screen P through the transparent section 20 without opening the protection cover 10.

According to another embodiment of the present invention, the transparent section 20 is preferably formed at a position corresponding to the area on the display screen P where the key information F is displayed when the mobile device M operates.

In addition, the transparent section 20 is formed by penetrating a portion of the front surface of the protection cover 10 so that an opening section 11 may be formed in a size corresponding to the area displaying the key information F of the display screen.

When the mobile device operates, i.e., when a character message or a missed call is received, while the protection cover 10 covers the display screen P, the transparent section 20 configured in the form of an opening allows a user to confirm the character message or the missed call while the protection cover 10 is not opened. In addition, the user may conveniently confirm the date and time, remaining battery or the like by pushing a power button or a home button while the protection cover 10 is not opened.

Accordingly, the user is provided with convenience of confirming and handling the key information F displayed on the display screen by touching the display screen through the opening section 11 of the protection cover 10 without opening the protection cover 10.

In addition, according to another embodiment of the present invention, as shown in FIGs. 1a and 1b, the transparent section 20 has the opening section 11 formed at a portion of the front surface of the protection cover 10, and the most outstanding characteristic configuration of the present invention is to further provide a transparent member 21 in the opening section 11 to protect the display screen P.

As described above, if the transparent section 20 is configured in the form of the opening section 11, a shock or a scratch may be generated on the surface of the display screen P since the display screen P is exposed through the transparent section 20.

In this embodiment, the transparent member 21 is further provided in the opening section 11 in order to prevent this problem.

According to still another embodiment of the present invention, as shown in FIG. 1a or 2a, when the opening section 11 is formed in, for example, a rectangular shape, the transparent member 21 is also formed in a rectangular shape in correspondence with the shape of the opening section 11.

Preferably, the transparent member 21 is formed in one piece together with the protection cover 10 to form a plane surface and has a transparent screen section 22 exposed outside, and a fixing unit 23 inserted into and assembled with the protection cover 10 is provided along the edges of the transparent screen section 22.

Accordingly, since the fixing unit 23 is inserted into and fixed to the protection cover 10, the protection cover 10 and the transparent member 21 are assembled in one piece.

Meanwhile, according to another embodiment of the present invention, as shown in FIG. 3a, the transparent section 20 may be formed in a size the same as that of the display screen P.

As described above, since the entire normal display content may be displayed on the display screen P of the mobile device M if the transparent section 20 is configured to have a wide area in correspondence with the entire area of the display screen P, the user may confirm the content while viewing the display screen P without opening the protection cover 10, and this will be described below in detail.

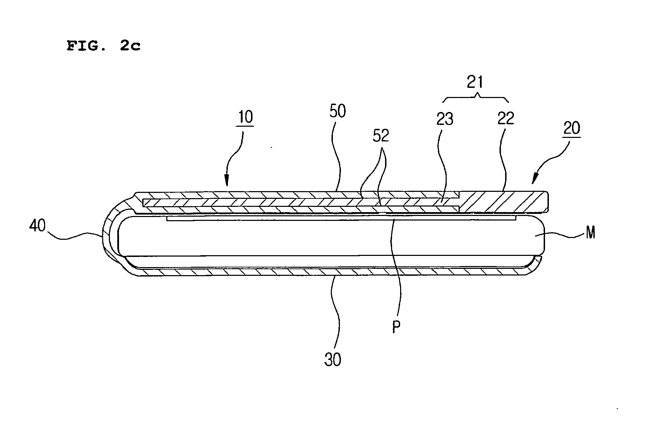

In addition, according to still another embodiment of the present invention, as shown in FIGs. 2c and 3b, there is provided a mounting cover 30 which is additionally mounted after removing the existing rear cover assembled on the rear surface of the mobile device M.

In addition, since mounting cover 30 is connected to the protection cover 10 through a connection member 40, the protection cover 10 performs an action of covering or uncovering the display screen P while rotating using the connection member 40.

At this point, while the display screen P is covered with the protection cover 10, the display screen P is protected, and the content of the display screen P may be viewed through the transparent section 20.

That is, as shown in FIGs. 2c and 3b, the connection member 40 is provided in the form of overlapping flexible and soft synthetic resins or fabrics capable of high frequency fusion at one side of the protection cover 10, for the opening and closing operation of the protection cover 10.

Since the connection member 40 connects the mounting cover 30 and the protection cover 10 as described above, the display screen P is opened or closed by the operation of a user for opening or closing the protection cover 10 while the protection cover 10 is mounted on the mobile device.

Particularly, since the protection cover 10 of the present invention has the transparent section 20, the content of the display screen P can be confirmed without opening the protection cover 10, and thus the number of opening and closing the protection cover can be reduced compared with the case of using a basic protection cover 10, and it may exhibit an outstanding effect of using the mobile device for an extended period of time.

In addition, the protection cover 10 described below as shown in FIG. 5 includes an outer member 50 and an inner member 51, and when the protection cover 10 is configured to includes the reinforcement member 60 inside thereof, it may be formed in a structure of attaching the inner circumference of the opening section 11 to the protection cover 10 through high frequency fusion.

In addition, resting shoulders 24 are provided by forming the inner side of the fixing unit 23 of the transparent member 21 to have steps, and an adhesive member 52 such as a double-sided tape is provided at the resting shoulders 24.

Accordingly, the transparent member 21 is attached and assembled on the inner circumferential surface of the opening section 11 by the adhesive member 52.

According to the configuration described above, since the transparent member 21 is attached to the opening section 11 after the protection cover 10 is completed, the transparent member 21 of further diverse materials may be selectively installed according to the design of the protection cover 10.

The transparent member 21 described above for finishing the transparent section 20 may be preferably formed of transparent or semitransparent synthetic resin having a conductive function, and the transparent member 21 may be formed through injection molding or manufactured by mechanically processing a thin plate of a PC material having excellent transparency and high strength.

Particularly, the transparent member 21 and the fixing unit 23 may be configured in one piece as shown in FIG. 1b, and when the protection cover 10 is formed of a fabric capable of high frequency fusion as described below, the fixing unit 23 may be formed to be extended from the transparent screen section 22 in the shape of a plate without separately providing the reinforcement member 60 between the fabrics so as to function as the reinforcement member 60 instead.

According the configuration described above, since the reinforcement member 60 is not required, the protection cover may be manufactured in one piece by directly adhering the outer member 50 and the inner member 51 of a fabric capable of high frequency fusion to both sides of the fixing unit 23 using the adhesive member 52, it is effective in that the manufacturing process and cost ca be reduced.

In addition, the transparent member 21 may be formed of a tempered glass or a half mirror, and the tempered glass has a transparency higher than that of the PC material and may provide a feeling of high quality if it is applied to the protection cover 10.

In addition, when the half mirror is applied as the transparent member 21, it may exhibit an additional effect of providing a function of a mirror when the display screen P does not emit light so that a user may use the mobile device in substitution for a mirror although the user does not separately carry a mirror, and when the mobile device operates, light is emitted from the display screen P, and the key information displayed on the display screen P may be conveniently confirmed through the half mirror.

In addition, since the PC material, the tempered glass and the half mirror are manufactured to have a conductive function, some functions may be handled by touching the display screen P although the protection cover 10 is closed, and the user is provided with convenience of confirming the content of the display screen P and handling the touch functions without opening the protection cover 10.

According to still another embodiment of the present invention, the transparent member 21 provided in the protection cover 10 of the present invention configured as described above may be formed in a variety of forms on the front surface of the protection cover 10 in a size corresponding to the position and outer size of the key information F or the display content shown on the display screen P.

That is, the key information F displayed on the display screen P is generally displayed in the vertical or horizontal direction.

To this end, the transparent member 21 according to the present invention may be formed, for example, in the horizontal direction on the protection cover 10 as shown in FIG. 1a, or alternatively, the transparent member 21 may be formed on the protection cover 10 to be extended long in the vertical direction as shown in FIGs. 2a and 6.

In addition, according to still another embodiment of the present invention, when the transparent member 21 is formed on the protection cover 10 in the horizontal or vertical direction, it may be formed to be placed at one side of the protection cover 10 as shown in FIG. 2a.

As described above, the transparent member 21 according to the present invention may provide a design of placing the transparent member 21 at one side end of the protection cover 10, as well as a design of arranging the transparent member 21 in the horizontal or vertical direction, according to the arrangement of the key information F displayed on the display screen P of the mobile device.

Accordingly, since the users may selectively choose and use the protection cover 10 of the present invention according to the arrangement of the key information F of the display screen P unique to each mobile device manufacturing company, the present invention applying the transparent member 21 of the protection cover 10 having a wide variety of arrangement forms provides user-oriented convenience.

Meanwhile, according to still another embodiment of the present invention, as shown in FIG. 2c, the fixing unit 23 described above is extendedly formed in the area other than the transparent member 21, and the outer member 50 and the inner member 51 are attached to both sides of the fixing unit 23 in one piece using the adhesive member 52.

In addition, according to still another embodiment of the present invention, the reinforcement member 60 may be further provided between the fixing unit 23 and the outer member 50 and between the fixing unit 23 and the inner member 51.

This is a configuration for forming the protection cover 10 when the protection cover 10 is formed of a fabric that can be fused using a high frequency or an ultrasonic wave. In the case of a fabric that cannot be fused, the protection cover 10 is formed of a fabric that does not react to a high frequency by forming a thermoplastic adhesion film or an adhesion layer reacting to a high frequency on the inner surface of the fabric.

That is, as shown in FIG. 2c or 3b, the transparent member 21 is arranged at an outer side or at the center of the protection cover 10 in the vertical or horizontal direction, and the fixing unit 23 may be formed by extending the other part of the protection cover 10 in one piece.

In this case, the outer member 50 and the inner member 51 are formed of a fabric, and the reinforcement member 60 or the like does not need to be additionally assembled between the fabrics.

That is, the fixing unit 23 is arranged between the fabrics instead of the reinforcement member 60, and the protection cover 10 is formed by attaching the reinforcement member 60 together with the outer member 50 and the inner member 51 using the adhesive member 52.

Since the transparent member 21 integrated with the fixing unit 23 instead of the reinforcement member 60 as described above does not separately need the reinforcement member 60, the manufacturing process is simplified, and the manufacturing cost and unit price are lowered.

Meanwhile, according to still another embodiment of the present invention, as shown in FIG. 3a, the protection cover 10 has a frame unit 12 formed along the edges of the display screen P.

The transparent member 21 is formed within the area of the frame unit 12 in a size corresponding to the display screen P and exposed outside.

The transparent section 20 is formed at a portion of the protection cover 10 in order to display the key information F in the embodiment described above, whereas the transparent section 20 is formed in a size the same as the entire area of the display screen P in this embodiment, and accordingly, the frame unit 12 is formed to assemble the transparent member 21 together with the protection cover 10.

Accordingly, the fixing unit 23 of the transparent member 21 is formed along the edges of all the four sides, and the fixing unit 23 is assembled to be inserted into the frame unit 12.

According to the configuration described above, the entire content of the display screen P may be confirmed through the transparent member 21 without opening the protection cover 10.

In addition, the mobile device may be used by touching the display screen P from outside after turning on the display screen P by pushing a button of the mobile device through the transparent member 21.

As a result, the user may confirm the content of the display screen P and conveniently use the mobile device by touching the display screen P without frequently opening the protection cover 10.

In addition, since the protection cover 10 protects the display screen P, an external shock does not make a scratch, and it is effective in that the mobile device can be used for an extended period of time without making a scratch on the display screen P although an expensive protection film or the like is not attached.

Meanwhile, according to still another embodiment of the present invention, function holes 13 are formed on the protection cover 10 at positions corresponding to functional components arranged on the front surface of the portable mobile device M.

Accordingly, it is preferable to essentially provide the function holes 13 at one side of the protection cover 10 according to the present invention.

The function holes 13 are configured as a selective combination of, for example, a communication speaker hole 14, a front side camera hole 15, a user recognition hole 16 and a light sensor hole 17.

In addition, at one side of the protection cover 10, a push button display unit 18 is further provided at a position corresponding to a function button unit or a touch button unit of the portable mobile device M.

According to the configuration described above, since a communication speaker, a front side camera, a user recognition sensor and a light sensor arranged at the upper and lower portions of the front surface of the mobile device are exposed outside through the function holes 13 when the protection cover 10 covers the display screen, each of the functions may be appropriately performed although the protection cover 10 covers the display screen.

Particularly, the push button display unit 18 is formed to easily confirm the position of a push button while the protection cover 10 covers the display screen P when the push button provided at a lower portion of the mobile device is handled even when the display screen P is covered with the protection cover 10.

This is a configuration for manufacturing the protection cover 10 considering the functional components arranged in a way unique to each mobile device manufacturing company and considering a case of adding a component having an additional function other than the functions described above or removing a component.

In addition, according to still another embodiment of the present invention, the transparent member 21 is assembled to be inserted into the protection cover 10 while maintaining a minute gap D between the bottom surface thereof and the display screen P so as not to contact with each other.

That is, if the protection cover 10 of the present invention is installed and used, the display screen P may be sufficiently protected although a protection film is not attached in a conventional way of using the mobile device without a protection cover.

However, since hardness of the transparent member 21 is similar to that of the display screen P if a transparent synthetic resin, a tempered glass or a half mirror is used as a material of the transparent member 21, a scratch or a shock may be generated since the transparent member 21 contacts with the display screen P while opening or closing the protection cover 10.

Accordingly, in the present invention, in order to prevent such a problem, the transparent member 21 is configured to maintain a minute gap D with the display screen P so that the bottom surface of the transparent member 21 may not contact with the display screen P when the transparent member 21 is installed and assembled in the protection cover 10 as shown in FIG. 7.

Since the bottom surface of the transparent member 21 maintains a minute gap with the display screen P, the protection cover 10 does not directly contact with the display screen P when the protection cover 10 covers the display screen P, and since the inner member 51 of the protection cover 10 formed of a fabric having a soft sense of touch, such as velvet or suede, directly contacts with the display screen P, a scratch is not made at all.

Meanwhile, according to still another embodiment of the present invention, whether or not the protection cover 10 is mounted may be confirmed when the protection cover 10 having the transparent section 20 is mounted on the mobile device.

That is, as shown in FIG. 8, the protection cover 10 of the present invention is configured to have a mounting cover 30 additionally mounted after removing the existing rear cover assembled on the rear surface of the mobile device M, and since the protection cover 10 is connected to the mounting cover 30 through a connection member 40, the display screen P may be protected.

Accordingly, a mount sensor unit 70 is provided at one side of the rear surface of the mobile device so that the mobile device may sense assembly of the mounting cover 30 when the mounting cover 30 is assembled on the rear surface of the portable mobile device M after separating the existing rear cover.

In addition, a mount recognition unit 80 is provided on the inner side of the mounting cover 30 so that the mount sensor unit 70 may recognize whether or not the mounting cover 30 is mounted.

The mount recognition unit 80 may be configured in a contact type mechanically contacting with the mount sensor unit 70 or a non-contact type maintaining a gap between the mount recognition unit 80 and the mount sensor unit 70.

The contact type may be configured in a variety of ways. For example, the mount sensor unit 70 is configured as a micro switch or a tact switch, and the mount recognition unit 80 may be configured in the form of a push projection protruding on the inner surface of the mounting cover 30. In this case, the rear cover is formed not to have the push projection so as to recognize the combined state of the mounting cover 30.

In addition, in the case of being configured as a non-contact type, the mount sensor unit 70 may be configured as a photo sensor or a magnetic sensor, and the mount recognition unit 80 may be formed as a blocking piece for blocking or passing light of the photo sensor or formed as a magnetic substance of a metallic material associated with the magnetic sensor.

Accordingly, if the mounting cover 30 is mounted after the rear cover of the mobile device is separated, the push projection, the blocking piece or the magnetic substance of a metallic material operates the switch, the photo sensor or the magnetic sensor, and the mobile device electrically recognizes whether or not the mounting cover 30 provided with the protection cover 10 is mounted.

To this end, it may be configured such that if the mounting cover is installed, the key information F displayed on the display screen P of the portable mobile terminal M is displayed only in the area of the transparent member 21 of the protection cover 10.

That is, the key information F is displayed on the display screen P as much as corresponding to the screen area of the transparent member 21 of the protection cover.

At this point, the transparent member 21 is formed at a portion of the front surface of the protection cover 10 as described above and displays only essential content F, or the transparent member 21 is formed to have a transparent member 21 having an area the same as the size of the front surface and displays the entire content of the display screen P.

Accordingly, the user may conveniently handle the mobile device by touching the surface of the transparent member 21 from outside without opening the protection cover 10 while confirming the key information F of the display screen P through the transparent member 21.

Meanwhile, according to still another embodiment of the present invention, a sensing means 110 for sensing opening and closing of the protection cover 10 is further provided, in addition to the configuration of sensing whether or not the protection cover 10 is mounted.

That is, as shown in FIGs. 9 and 10, the sensing means 110 for determining whether or not the protection cover 10 covers the display screen P is embedded in the protection cover 10.

To this end, a circuit connection unit 130 is provided on the rear surface of the mobile device, and the sensing means 110 is configured to be electrically connected with the circuit connection unit 130.

A connection terminal 120 is embedded inside the mounting cover 30, and the connection terminal 120 is configured to turn on or turn off the display screen P according to the opening or closing state of the protection cover 10 in association with the control circuit unit of the mobile device M while transmitting and receiving a signal informing an opening or closing state to and from the circuit connection unit 130 in wired or wireless communication.

According the configuration described above, the mount sensor unit 70 which determines the installation state of the protection cover 10 may be systematically associated with the sensing means.

That is, if the mounting cover 30 is installed in order to mount the protection cover 10 after separating the rear cover of the mobile device, the mobile device recognizes that the mounting cover 30 having the protection cover 10 is mounted through the mount recognition unit 80 and the mount sensor unit 70.

In addition, depending on the type of the protection cover 10, the mobile device may be configured to be controlled by an internal program of the mobile terminal to recognize whether the transparent member 21 is formed in a size of a part of the display screen P or in a size of the entire display screen P based on the size of the transparent member 21.

Accordingly, since the mobile device displays the key information F on the display screen P in correspondence to the size of the transparent member 21, the user may handle the mobile device by directly touching the surface of the transparent member 21 from outside.

In addition, when the protection cover 10 of the mobile terminal is closed, the sensing means 110 provided on the protection cover 10 senses the closed state of the protection cover 10 and recognizes whether or not the protection cover 10 covers the mobile device through the connection terminal 120 and the circuit connection unit 130.

If a character message or a missed call arrives at the mobile device in this state, the mobile device displays normal content displayed on the display screen P when the display screen P is not covered with the protection cover 10 and displays the key information F only in the area of the transparent member 21 when the protection cover 10 covers the display screen P.

In this manner, the protection cover 10 according to the present invention allows the mobile device to recognize whether or not the protection cover 10 is installed through the mounting cover 30 in association with the mobile device, and then the protection cover 10 senses that the display screen P is covered with the protection 10 covers and displays the key information F on the display screen P in correspondence to the size of the transparent member 21.

Accordingly, the protection cover 10 of the present invention is configured to exhibit an outstanding effect of handling the mobile device by touching the protection cover 10 even when the protection cover 10 covers the display screen P, unlike a conventional protection cover 10 which performs only a function of safely protecting the display screen P of the mobile device.

According to still another embodiment of the present invention, the sensing means 110 described above may be configured of a magnetic sensor, an illuminance sensor, a photo sensor or a proximity sensor.

That is, when the photo sensor or the illuminance sensor is applied as the sensing means 110 installed inside the protection cover 10, the sensing means 110 may detect whether or not the protection cover 10 covers the display screen P by sensing the light of the display screen P, and when the proximity sensor is applied as the sensing means 110, the sensing means 110 may detect whether or not the protection cover 10 covers the display screen P by sensing the distance between the display screen and the protection cover 10.

In addition, in the case of the magnetic sensor, a magnetic substance or the like associated with the magnetic sensor may be installed around the display screen P of the mobile device to sense whether the protection cover 10 is opened or closed in association with the protection cover 10.

As described above, according to the sensor type and the sensing method, the protection cover 10 itself may apply the sensing means 110 mounted on the protection cover 10 without changing the specification of an existing mobile device, and when a mobile device manufacturing company itself manufactures the protection cover 10 to be compatible, the protection cover 10 may be configured to be associated with the mobile device.

Meanwhile, according to still another embodiment of the present invention, a configuration for installing the sensing means 110 inside the protection cover 10 is also provided.

To this end, as shown in FIGs. 4a and 4b, the protection cover 10 includes an outer member 50 and an inner member 51, and the transparent member 21 includes a transparent screen section 22 and a fixing unit 23 formed along the edges of the transparent screen section 22.

The fixing unit 23 is configured to be fixed between the outer member 50 and the inner member 51 and assembled in one piece.

When the outer member 50 and the inner member 51 are made of a fabric capable of high frequency fusion or ultrasonic wave fusion, a reinforcement member 60 of a synthetic resin material for forming the protection cover 10 in a plate shape is further provided between the outer member 50 and the inner member 51.

In addition, the fixing unit 23 is configured to be fixed to the reinforcement member 60 while being inserted in the reinforcement member 60.

That is, according to still another embodiment of the present invention, the reinforcement member 60 may include a first reinforcement plate 61 and a second reinforcement plate 62 formed of synthetic resin.

A resting unit 63 for accommodating the fixing unit 23 may be provided between the first reinforcement plate 61 and the second reinforcement plate 62, and the fixing unit 23 is accommodated in the resting unit 63 and adhered to the resting unit 63 by the adhesive member 52.

In addition, the protection cover 10 having the transparent member 21 is completed by configuring the transparent screen unit 22 inside the resting unit 63 to be exposed outside through a transparent window 64 formed to communicate with the opening section 11.

In addition, according to still another embodiment of the present invention, the first reinforcement plate 61, the second reinforcement plate 62, the resting unit 63 and the fixing unit 23 are attached by the adhesive member 52.

This is a configuration for forming the reinforcement member 60 and the transparent member 21 in a plate shape, and in addition, it is preferable that the outer member 50 and the inner member 51 are attached to the outer surfaces of the first reinforcement plate 61 and the second reinforcement plate 62 by the adhesive member 52 to complete the protection cover 10 in a slim size.

Since the outer member 50 is exposed outside, it should be made of a fabric capable of high frequency fusion, which is durable to a shock or a scratch and has ornamental patterns of a variety of colors and shapes.

Since the inner member 51 is a part contacting with the display screen P, it is made of a soft fabric such as velvet or suede that will not make a scratch on the display screen P when it contacts with the display screen P.

In addition, according to still another embodiment of the present invention, when the sensing means 110 described above is mounted on the protection cover 10, it is configured to accommodate a FPCB 100 electrically connected to the sensing means 110 and the mounting cover 30 through the connection member 40.

To this end, an accommodation groove 65 for accommodating the FPCB 100 is further provided at one side of the resting unit 63.

The accommodation groove 65 is formed along a path connecting the FPCB 100, and the depth and width thereof are determined to be matched to the depth and the width of the FPCB 100. An adhesive member 52 such as a double-sided adhesive tape may be provided on both sides of the FPCB 100 or the accommodation grooves 65 of the first reinforcement plate 61 and the second reinforcement plate 62.

In addition, the sensing means 110 accommodated inside the reinforcement member 60 as described above is provided at one end of the FPCB 100 in order to sense a state of covering the display screen P with the protection cover 10.

A separate space for accommodating the sensing means 110 is formed between the first reinforcement plate 61 and the second reinforcement plate 62 to install the sensing means 110 inside the protection cover 110.

In addition, the accommodation groove 65 for accommodating the FPCB 100 is formed to be connected to the space for accommodating the sensing means 110.

In addition, the middle part of the FPCB 100 is inserted inside the connection member 40 connected to one end of the protection cover 10.

The other end of the FPCB 100 is connected to the connection member 40 to be connected to the connection terminal 120 provided inside the mounting cover 30 of the mobile device, and since the connection terminal 120 is connected to the circuit connection unit 130 provided on the rear surface of the portable mobile device M, the display screen P is turned on and off according to opening and closing of the protection cover 10.

The sensing means 110 described in this embodiment may be configured of a magnetic sensor, an illuminance sensor, a photo sensor, a proximity sensor or a magnetic sensor as described above, and apparently, the essential content F displayed on the display screen in response to the operation of the protection cover 10 and the mounting cover 30 in correspondence to each sensor may be confirmed through the transparent member 21.

According to still another embodiment of the present invention, there is provided a protection cover for a portable mobile device interconnected with the mobile device only through opening and closing of the protection cover, without the need of tearing off the rear cover of the portable mobile device and connecting to the mobile device.

Generally, although a method of removing (tearing off) the rear cover of a portable mobile device and connecting a protection cover to the mobile device is advantageous in that a feeling of integrating the mobile device and the protection cover for the mobile device may be improved by appearance, it is troublesome to attach the protection cover, and a problem may occur in driving the mobile device if a plurality of electronic control means is included.

Accordingly, there is provided an embodiment in which a protection cover for a mobile device is attached to the outer surface of the mobile device without removing the rear cover and recognizes a state of covering the display screen P.

In this embodiment, the portable mobile device includes a sensing means capable of recognizing opening and closing of the protection cover 10 so as to display key information F in a portion of the display screen P corresponding to the transparent section 20 of the protection cover when the protection cover 10 covers the display screen P.

The protection cover for a mobile device is attached to and interconnected with the portable mobile device.

The protection cover for a mobile device includes the protection cover 10 having the transparent section 20 for confirming the key information F displayed on the display screen P when the mobile device M operates while the protection cover 10 covers the display screen P, and the protection cover 10 is connected to the mounting cover 30 attached to the rear surface of the mobile device M through the connection member 40 and may open and close the display screen P.

At least one of a magnetic sensor, a capacitive sensor, a resistive sensor and an electrical contact sensor may be adopted as the sensing means included in the portable mobile device.

Generally, it may be convenient to adopt the magnetic sensor or the electrical contact sensor as the sensing means.

In this case, the protection cover 10 will further include a magnetic material for transferring magnetic signals or a conductive material for transferring electrical signals, and when the protection cover 10 containing such a material covers the display screen P, the sensing means senses the magnetic material or the conductive material included in the protection cover 19 and informs the mobile device M of the state of covering the display screen P with the protection cover 10.

In addition, there may be provided an embodiment in which the display screen P of the mobile device may be turned on or turned off according to whether or not the display screen P covers the protection cover 10, in addition to recognizing by the mobile device that whether or not the protection cover 10 covers the display screen P.

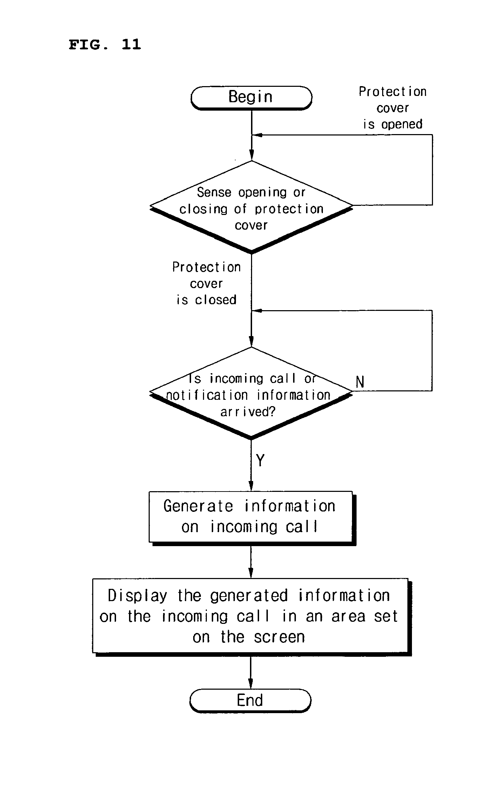

Referring to FIG. 11, in another embodiment, the mobile device senses whether or not the display screen P covers the protection cover 10.

If an incoming call is arrived in the case where it is recognized that the protection cover 10 covers the display screen P, information on the incoming call is displayed in a predetermined portion of the display screen P.

If notification information is arrived in the case where the protection cover 10 covers the display screen P, the notification information is displayed on a predetermined portion of the display screen P.

At this point, the portion of the display screen P displaying the notification information such as information on the incoming call or arrival time of the incoming call is set to be matched to the transparent section formed on the protection cover so that the user may confirm the information.

According to the present invention, since the front surface of a portable mobile device such as a smart phone may be safely protected even when an external shock is applied, and the content on the display screen may be confirmed or a touch function can be handled even when the protection cover is not opened, functions of the mobile device can be sufficiently used, while the mobile device is safely protected, by mounting the protection cover.

Furthermore, the mobile device may recognize whether or not the protection cover is mounted by the mount sensor unit included in the sensing means and the mounting cover provided on the protection cover, and in addition, the protection cover is provided so as to recognize opening and closing of the protection cover. Therefore, a user may be provided with convenience of handling the mobile device from outside through the transparent member although the protection cover is less frequently opened.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A protection cover 10 for a mobile device configured to protect a display screen P of the portable mobile device M, the protection cover comprising:
a transparent section 20 capable of confirming key information F displayed on the display screen P when the mobile device M operates while the protection cover 10 covers the display screen P.

2. The protection cover according to claim 1, wherein the transparent section 20 is formed at a position corresponding to an area displaying the key information F shown on the display screen P when the mobile device M is driven.

3. The protection cover according to claim 1, wherein the transparent section 20 is formed in a size the same as that of the display screen P.

4. The protection cover according to claim 1, wherein the protection cover 10 includes a mounting cover 30 additionally mounted after removing a rear cover assembled on a rear surface of the mobile device M and is connected to the mounting cover 30 through a connection member 40 connected to the mounting cover 30 to protect the display screen P.

5. The protection cover according to claim 1, wherein the transparent section 20 has an opening section formed at a portion of a front surface of the protection cover 10, and a transparent member 21 for protecting the display screen P is provided in the opening section 11.

6. The protection cover according to claim 5, wherein the transparent member 21 includes a transparent screen unit 22 assembled in correspondence with the opening section 11 and exposed outside and a fixing unit 23 formed along edges of the transparent screen section 22, and the fixing unit 23 is fixedly inserted into the protection cover 10 and assembled in one piece.

7. The protection cover according to claim 5, wherein the transparent member 21 is formed of a transparent or semitransparent synthetic resin having a conductive function, a tempered glass or a half mirror so that the display screen P may be handled by touch from outside.

8. The protection cover according to claim 5, wherein the transparent member 21 is formed in correspondence with a position and an outer size of the key information F or display content shown on the display screen P.

9. The protection cover according to claim 5, wherein the transparent member 21 is formed on the protection cover 10 in a horizontal direction.

10. The protection cover according to claim 5, wherein the transparent member 21 is formed on the protection cover 10 to be extended long in a vertical direction.

11. The protection cover according to claim 5, wherein the transparent member 21 is formed to be placed at one side of the protection cover 10 in a horizontal or vertical direction.

12. The protection cover according to claim 6, wherein the fixing unit 23 is extendedly formed in an area other than the transparent member 21, and an adhesive member 52 is provided on both sides of the fixing unit 13 to be attached to an outer member 50 and an inner member 51.

13. The protection cover according to claim 12, wherein a reinforcement member 60 is further provided between the fixing unit 23 and the outer member 50 and between the fixing unit 23 and the inner member 51.

14. The protection cover according to claim 5, wherein the protection cover 10 has a frame unit 12 formed along edges of the display screen P, and the transparent member 21 is formed to be exposed outside within an area of the frame unit 12 in a size corresponding to the display screen P.

15. The protection cover according to claim 1, wherein function holes 13 are formed on the protection cover 10 at positions corresponding to functional components arranged on a front surface of the portable mobile device M.

16. The protection cover according to claim 15, wherein the function hole 13 is configured as a selective combination of a communication speaker hole 14, a front side camera hole 15, a user recognition hole 16 and a light sensor hole 17.

17. The protection cover according to claim 1, wherein a push button display unit 18 is further provided at a side of the protection cover 10 at a position corresponding to a function button unit or a touch button unit of the portable mobile device M.

18. The protection cover according to claim 5, wherein the transparent member 21 is assembled to be inserted into the protection cover 10 while maintaining a minute gap D between a bottom surface thereof and the display screen P so as not to contact with each other.

19. The protection cover according to claim 4, wherein a mount sensor unit 70 is provided at one side of the rear surface of the portable mobile device M so as to recognize whether or not the protection cover 10 is mounted through a contact or non-contact type touch of the mount sensor unit 70 with the mount recognition unit 80 provided on the mounting cover 30; and when the mounting cover 30 is installed, the key information F displayed on the display screen P of the portable mobile device M is displayed only in an area of the transparent member 21 of the protection cover 10.

20. The protection cover according to claim 4, wherein a sensing means for determining whether or not the protection cover covers the display screen is embedded inside the protection cover 10, and the sensing means is configured to turn on or turn off the display screen according to an opening or closing state of the protection cover in association with a control circuit unit in the mobile device while transmitting and receiving the opening or closing state in wired or wireless communication to and from a connection terminal of the rear cover connected to a circuit connection unit provided on the rear surface of the mobile device.

21. The protection cover according to claim 5, wherein the protection cover 10 includes an outer member 50 and an inner member 51, and the transparent member 21 includes a transparent screen section 22 and a fixing unit 23 formed along edges of the transparent screen section 22, wherein the fixing unit 23 is fixed between the outer member 50 and the inner member 51 and assembled in one piece.

22. The protection cover according to claim 21, wherein a reinforcement member 60 is further provided between the outer member 50 and the inner member 51, and the fixing unit 23 is inserted and fixed inside the reinforcement member 60.

23. The protection cover according to claim 22, wherein the reinforcement member 60 includes a first reinforcement plate 61 and a second reinforcement plate 62 formed of synthetic resin, and the fixing unit 23 is accommodated in a resting unit 63 formed between the first reinforcement plate 61 and the second reinforcement plate 62, and the transparent screen unit 22 is configured inside the resting unit 63 to be exposed outside through a transparent window 64 formed to communicate with the opening section 11.

24. The protection cover according to claim 23, wherein the first reinforcement plate 61 and the second reinforcement plate 62, and the resting unit 63 and the fixing unit 23 are attached by the adhesive member 52 in one piece, and the outer member 50 and the inner member 51 are attached to outer surfaces of the first reinforcement plate 61 and the second reinforcement plate 62 by the adhesive member 52.

25. The protection cover according to claim 24, wherein an accommodation groove 65 for accommodating an FPCB 100 is further provided at one side of the resting unit 63.

26. The protection cover according to claim 25, wherein the sensing means 110 accommodated inside the reinforcement member 60 to sense opening or closing of the protection cover 10 is provided at one end of the FPCB 100, wherein a middle part of the FPCB 100 is inserted inside the connection member 40 connected to one end of the protection cover 10, and the other end of the FPCB 100 is connected to the connection member 40 to be connected to the connection terminal 120 provided inside the mounting cover 30 assembled on the rear surface of the mobile device, wherein the connection terminal 120 is connected to the circuit connection unit 130 provided on the rear surface of the portable mobile device M, and the display screen P is turned on and off according to opening and closing of the protection cover 10.

27. The protection cover according to claim 20 or 26, wherein the sensing means 110 is configured of a magnetic sensor, an illuminance sensor, a photo sensor or a proximity sensor.

28. A protection cover for a mobile device connected to the portable mobile device which includes a sensing means capable of recognizing opening and closing of the protection cover 10 so as to display key information F in a portion of a display screen P corresponding to a transparent section 20 of the protection cover when the protection cover 10 is closed, the protection cover comprising:
a transparent section 20 capable of confirming the key information F displayed on the display screen P when the mobile device M operates while the protection cover 10 is closed, wherein
the protection cover 10 connected to a mounting cover 30 attached to a rear surface of the mobile device M through a connection member 40 may open or close the display screen P.

29. The protection cover according to claim 28, wherein at least one of a magnetic sensor, a capacitive sensor, a resistive sensor and an electrical contact sensor is adopted as the sensing means included in the portable mobile device.

30. The protection cover according to claim 28, wherein the protection cover 10 further includes a magnetic material for transferring magnetic signals or a conductive material for transferring electrical signals.

31. A protection cover for a mobile device connected to the portable mobile device which includes a sensing means capable of recognizing opening and closing of the protection cover 10 so as to display key information F in a portion of a display screen P corresponding to a transparent section 20 of the protection cover when the protection cover 10 is closed, the protection cover comprising:
a transparent section 20 capable of confirming the key information F displayed on the display screen P when the mobile' device M operates while the protection cover 10 is closed, wherein
the protection cover 10 connected to a mounting cover 30 attached to a rear surface of the mobile device M through a connection member 40 may open or close the display screen P and turn on or turn off the display screen P of the mobile device according to opening or closing of the protection cover 10.
